Europäisches Patentamt

European Patent Office

Office européen des brevets

(11) Veröffentlichungsnummer: **0 151 762**
A2

(12) ## EUROPÄISCHE PATENTANMELDUNG

(21) Anmeldenummer: **84115612.8**

(22) Anmeldetag: **17.12.84**

(51) Int. Cl.⁴: **C 08 F 220/10**
**G 02 B 1/04**

(30) Priorität: **30.12.83 DE 3347577**

(43) Veröffentlichungstag der Anmeldung:
**21.08.85 Patentblatt 85/34**

(84) Benannte Vertragsstaaten:
**AT BE CH DE FR GB IT LI NL SE**

(71) Anmelder: **BAYER AG**
**Konzernverwaltung RP Patentabteilung**
**D-5090 Leverkusen 1 Bayerwerk(DE)**

(72) Erfinder: **Wingler, Frank, Dr.**
**Walter-Flex-Strasse 7**
**D-5090 Leverkusen(DE)**

(72) Erfinder: **Schwabe, Peter, Dr.**
**Dudweiler Strasse 17**
**D-5090 Leverkusen(DE)**

(72) Erfinder: **Geyer, Otto-Christian, Dr.**
**Bahnhofstrasse 12**
**D-6330 Wetzlar(DE)**

(54) **Hydrophile Copolymerisate, deren Verwendung in der Medizin sowie Linsen und Schalen für die Augenoptik.**

(57) Die Erfindung betrifft chemisch einheitliche, statistisch aufgebaute unvernetzte Copolymerisate des Vinylpyrrolidons mit Methacrylsäure-alkyl- und/oder -cycloalkylestern mit einer Glasübergangstemperatur von über 70°C, die hydrophil sind, ohne jedoch in wäßrigen Medien zu Hydrogelen aufzuquellen oder zu erweichen. Die erfindungsgemäßen Materialien eignen sich zur Herstellung von Formkörpern, die in direktem Kontakt zu lebendem Gewebe stehen, wie z. B. harte bis halbharte Linsen und Schalen für die Augenoptik, insbesondere Irislinsen, Kontaktlinsen und Skleralschalen.

EP 0 151 762 A2

- 1 -

BAYER AKTIENGESELLSCHAFT          5090 Leverkusen, Bayerwerk

Konzernverwaltung RP
Patentabteilung                   Sft/li-c

Hydrophile Copolymerisate, deren Verwendung in der Medizin sowie Linsen und Schalen für die Augenoptik

Die Erfindung betrifft chemisch einheitliche, statistisch aufgebaute unvernetzte Copolymerisate des Vinylpyrrolidons mit Methacrylsäure-alkyl- und/oder -cycloalkylestern mit einer Glasübergangstemperatur von über 70°C, die hydrophil sind, ohne jedoch in wäßrigen Medien zu Hydrogelen aufzuquellen oder zu erweichen. Die erfindungsgemäßen Materialien eignen sich zur Herstellung von Formkörpern, die in direktem Kontakt zu lebendem Gewebe stehen, wie z. B. harte bis halbharte Linsen und Schalen für die Augenoptik, insbesondere Irislinsen, Kontaktlinsen und Skleralschalen.

In der Augenoptik werden bereits eine Reihe verschiedener Kunststoffe, so u.a. auch Copolymere des Vinylpyrrolidons eingesetzt, sei es für intraokulare Irislinsen, Kontaktlinsen oder Skleralschalen. Ein Hauptproblem der Verwendung von Kunststoffen in der Augenoptik ist, daß die Materialien Einfluß auf die Stoffwechselvorgänge des Auges haben und Reizzustände erzeugen können. Ziel ist daher das Auffinden von Materialien, die einerseits keine

Le A 22 805-Ausland

Reizwirkung aufweisen und andererseits optischen Anforderungen der Augenmedizin entsprechen.

In den letzten Jahren sind Materialien auf Basis von Copolymerisaten des Vinylpyrrolidons eingeführt worden, die
eine gute Verträglichkeit auf dem Auge zeigen. Es handelt
sich bei diesen Materialien um sogenannte Weich-Hydrogele,
d.h. vernetzte Copolymere, die in der Lage sind, Wasser
in der Größenordnung von 40 bis 200 Gew.-% aufzunehmen,
dabei zu erweichen und ihr Volumen zu vergrößern.

Weiche Hydrogellinsen besitzen gegenüber Linsen aus harten bis halbharten Materialien anfänglich auf Grund ihrer
Weichheit und Anschmiegbarkeit einen höheren Tragekomfort, haben aber den Nachteil, daß sie auf dem Auge aufliegen, den Austausch von Tränenflüssigkeit zur Versorgung
des Auges erschweren, einer sehr intensiven Pflege bedürfen und leicht mit Bakterien und Sporen infiziert werden können.

Harte oder halbharte Materialien sind nicht so empfindlich; die Auflageflächen auf dem Auge können kleiner gehalten werden und mit Hilfe von asphärischen Innengeometrien kann ein austauschbarer Tränenflüssigkeits-Trägerfilm zwischen Hornhaut und Linse bzw. Schale erzeugt werden. Als harte oder halbharte Materialien werden heute
in erster Linie Polymethylmethacrylat sowie weichmacherfreie Celluloseacetobutyrat-Compounds eingesetzt. Beide
Materialien sind in unvernetzter Form erhältlich und thermoplastisch zu Linsen verarbeitbar. Polymethylmethacrylat
hat jedoch den Nachteil der Sprödigkeit, der mangelnden
Elastizität und der schlechten Benetzbarkeit. Cellu-
loseacetobutyrat-Compounds, insbesondere in Kombina-

**0151762**

tion mit Polyethylen-co-vinylacetat, sind in diesem Punkt dem Polymethylmethacrylat überlegen, jedoch mit dem Nachteil einer gegenüber Polymethylmethacrylat etwas höheren Lichtstreuung behaftet.

Aufgabe war es, ein neues unvernetztes, thermoplastisches hartes bis halbhartes Material zu finden, das in seinem Eigenschaften als optisches Material für das Auge den bewährten Celluloseacetobutyrat-Compounds ähnelt, jedoch die hohe Lichtdurchlässigkeit und geringe Lichtstreuung von Polymethylmethacrylat-Gläsern besitzt.

Es wurde überraschend gefunden, daß diese Anforderungen mit harten bis halbharten Vinylpyrrolidon-Copolymerisaten erfüllt werden können.

Gegenstand der vorliegenden Erfindung sind statistische und unvernetzte Copolymerisate mit einer Glasübergangstemperatur von höher als 70°C aus:

A)    10 bis 25 Mol-% Vinylpyrrolidon und

B)    90 bis 75 Mol-% Methacrylsäure-$C_5$-C -cycloalkyl und/ oder $C_1$-$C_8$-alkylestern,

wobei der molare Anteil an Methyl-Gruppen im Esterteil, bezogen auf Summe von Methacrylsäure-$C_1$-$C_8$-alkyl- und -cycloalkylestern, 80 Mol-% nicht überschreitet und der Gehalt an $C_2$-$C_8$-Alkyl- oder Cycloalkylresten im Esterteil 20 bis 100 Mol-% beträgt und die Summe von A) + B) gleich 100 ist.

Le A 22 805

Vinylpyrrolidon besitzt gegenüber Methylmethacrylat ein recht ungünstiges Copolymerisationsverhalten. Die Copolymerisationsparameter für eine mit Radikalen gestartete Copolymerisation betragen für Vinylpyrrolidon (1) $r_1$ = 0,005 und für Methylmethacrylat (2) $r_2$ = 4,7 (siehe J. Brandrup, E.H. Immergut, Polymer Handbook, New York 1966).

Das bedeutet, daß bei der Polymerisation eines Gemisches von Vinylpyrrolidon und Methylmethacrylat zu Beginn Polymerketten vorwiegend aus Methacrylat-Einheiten und gegen Ende der Polymerisation Polymerketten mit vorwiegend Vinylpyrrolidoneinheiten entstehen. Das Polymerisat ist also nicht statistisch aufgebaut und chemisch uneinheitlich. Polymerketten mit einem Anteil von über 30 bis 40 Mol-% Vinylpyrrolidon hydratisieren in Wasser und führen zu einem Aufquellen des Polymerisates in wäßrigem Medium. Das ist der Grund, warum Vinylpyrrolidon bislang nur für die Herstellung von weichen Hydrogellinsen verwendet wurde.

Es gelang nun, Vinylpyrrolidon mit Methacrylsäurealkylestern bzw. -cycloalkylestern zu unvernetzten, statistischen, chemisch einheitlich aufgebauten Copolymeren zu vereinen, wobei die Copolymere nur maximal 72 Mol-% Methacrylsäuremethylester, jedoch bis zu 90 Mol-% längerkettigen $C_2$-$C_8$-Alkylester und/oder $C_5$-$C_8$-Cycloalkylester enthalten. Der Anteil des Vinylpyrrolidons beträgt minimal 10 und maximal 25 Mol-%, wobei die Summe der Mol-Prozente von Methacrylsäureester und Vinylpyrrolidon jeweils 100 beträgt. Es ist als überraschend anzusehen, daß diese Copolymere die Kombination von hoher Lichtdurchlässigkeit und geringem Streulichtanteil in wäßrigem
Mileu, gepaart mit einer hervorragenden Verträglichkeit
am Auge, einer hohen Radienstabilität und einer ausgezeichneten thermoplastischen Verformbarkeit besitzen.

Erfindungsgemäß bevorzugt sind harte bis halbharte, in
wäßrigem Medium keine Hydrogele bildende Linsen und Schalen für die Augenoptik aus chemisch einheitlichen, statistischen und unvernetzten thermoplastischen Copolymerisaten mit einer Glasübergangstemperatur von höher als 70°C
aus:

A)    10 bis 25 Mol-% Vinylpyrrolidon,
B)    30 bis 67,5 Mol-% Methacrylsäuremethylester und
C)    7,5 bis 45 Mol-% n- oder Isobutylmethacrylat,

wobei die Summe A) + B) + C) 100 beträgt.

Für die Ausgewogenheit der Eigenschaften ist die beanspruchte Polymerzusammensetzung wesentlich. Copolymere
mit mehr als 80 Mol-% Methacrylsäuremethylester in der
Methacrylatkomponente besitzen eine zu hohe Glasübergangstemperatur von über 119°C und eine zu hohe Verarbeitungstemperatur von über 200°C, bei der sich das Material verfärbt. Außerdem neigen solche Copolymerisate
bei ihrer Herstellung leicht zur Vernetzung und liefern
recht spröde Linsenmaterialien. Ein Mindestanteil von
18 Mol-% eines $C_2$-$C_8$-Alkyl- bzw. cyclischen $C_5$-$C_8$-Meth-
acrylsäureester-Anteils, bezogen auf gesamtes Copoly-

Le A 22 805

merisat, ist wesentlich. Die Copolymerisate werden nach der Methode der Massepolymerisation, wie beispielsweise in der DE-AS 27 24 360 beschrieben, hergestellt.

Als Methacrylsäure-$C_2$-$C_8$-Alkylester kommen z.B. Methacrylsäure-ethyl-, n-propyl-, -isopropyl-, -n-butyl-, -isobutyl-, -tert.-butyl- und -2-ethylhexyl-ester in Frage, als Methacrylsäure-$C_5$-$C_8$-Cycloalkylester kommen z.B. Methacrylsäurecyclopentyl-, cyclohexyl- und -cyclooctyl-ester in Betracht.

Erfindungsgemäß bevorzugt sind Polymerisate, die neben Methacrylsäuremethylester n-, oder iso-Butylmethacrylat enthalten. Sie zeichnen sich durch ein besonders gutes Verarbeitungsverhalten aus. Die Glasübergangstemperaturen der bevorzugten Polymerisate liegen zwischen 85 und 100°C. Das Wasseraufnahmevermögen beträgt etwa 2-6 Gew.-%, jedoch tritt hierbei noch keine Hydratation zu einem Gel auf. Die Lichtdurchlässigkeit nach DIN 5036 beträgt mehr als 90 %, gemessen an 1 cm dicken Schichten, wobei 8 % Licht durch Oberflächenreflektion verloren gehen.

Die Copolymeren können direkt zu Linsenkörpern verspritzt werden. Man kann aber auch zunächst Rohlinge herstellen und diese spanabhebend bearbeiten und anschließend polieren. Die Verarbeitung zu intraokularen Linsen, Augen-Kontaktlinsen oder -Kontaktschalen ist nach herkömmlichen Verfahren durch Spritzguß in Formen, durch Schleuderguß in Formen oder durch Stanzen oder Prägen aus Folien, Pulvern oder Granulaten möglich.

Le A 22 805

Die erfindungsgemäßen Linsen zeichnen sich durch eine besonders gute Verträglichkeit, insbesondere bei Dauertrageversuchen, aus.

Die erfindungsgemäßen Copolymerisate können daneben auch ganz allgemein in der biomedizinischen Technik zur Herstellung von Formkörpern verwendet werden, die hydrophil und mit biologisch aktivem Gewebe verträglich sein sollen. Beispiele hierfür sind Implantate, künstliche Herzklappen, Unterfütterungsmaterialien in der Dentaltechnik, etc.

Die nachfolgenden Beispiele dienen zur Erläuterung der Erfindung.

Le A 22 805

**Beispiele**

Die in der Tabelle 1 angegebenen Monomergemische (die Zahlenwerte bedeuten Gewichtsteile) werden nach der Methode der in der DE-AS 2 724 360 beschriebenen Massepolymerisation bei einer mittleren Verweilzeit von 45 Min., 135°C Polymerisationstemperatur und 50 Gew.-% stationärem Umsatz mit einer 5 %igen Lösung von tert.-Butylperpivalat in Methylethylketon polymerisiert.

**Tabelle 1**

|                                  | A    | B    | C    |
|----------------------------------|------|------|------|
| Methacrylsäure-methylester       | -    | 40   | 40   |
| Methacrylsäurecyclo-hexylester   | 40   | -    | -    |
| Methacrylsäure-isobutylester     | 30   | -    | 30   |
| Methacrylsäureethyl-ester        | -    | 35   | -    |
| Vinylpyrrolidon                  | 30   | 25   | 30   |
| n-Dodecylmercaptan               | 0,1  | 0,15 | 0,1  |
| Methylethylketon                 | -    | -    | 10   |
| Ethylbenzol                      | -    | 8    | -    |
| Methylenchlorid                  | 8    | -    | -    |

Le A 22 805

In Tabelle 2 sind die Eigenschaften und die Zusammensetzungen der Polymerisate aufgeführt:

Tabelle 2

|                                      | A             | B              | C             |
|--------------------------------------|---------------|----------------|---------------|
| Polymerzusammen-setzung in Mol-%:    |               |                |               |
| Methacrylsäuremethylester            | -             | 50             | 53            |
| Methacrylsäurecyclohexyl-ester       | 42            | -              | -             |
| Methacrylsäureisobutyl-ester         | 36            | -              | 28            |
| Methacrylsäureethylester             | -             | 39             | -             |
| Vinylpyrrolidon                      | 22            | 11             | 19            |
| Glasübergangstemperatur a)           | 87°C          | 99°C           | 91°C          |
| Wasseraufnahme                       | 3,5 Gew.-%    | 2,42 Gew.-%    | 4,3 Gew.-%    |
| Lichtdurchlässigkeit        b)       | 91 %          | 91 %           | 91 %          |

a)   Gemessen nach Differential-thermomechanischer
     Analyse

b)   Gemessen an hydratisierten 1 cm dicken Preßlingen,
     Reflexionsanteil mit inbegriffen, nach DIN 5036.

Die Polymerisate A, B und C wurden auf einer Spritzgußmaschine bei 200°C zu Rohlingen vom Gewicht 500 mg und
einem Durchmesser von 12 mm gespritzt. Aus diesen Rohlingen wurden Kontaktlinsen durch Drehen und Polieren
hergestellt. Die Linsen wurden 3 Tage in verdünnter

Le A 22 805

Wasserstoffperoxid-Lösung aufbewahrt und anschließend 8
Tage dialysiert. An den so behandelten Linsen wurde die
Wasseraufnahme durch Trocknen und Zurückwiegen gemessen.

Die hydratisierten Linsen wurden am Karnickelauge in einem 40-tägigen Dauertrage-Test gegenüber herkömmlichen Linsenmaterialien aus Celluloseacetobutyrat getestet. In der Verträglichkeit zeigt sich kein Unterschied. Jedoch ist an der Spaltlampe eine gegenüber Celluloseacetobutyrat wesentlich geringere Lichtstreuung zu erkennen.

Le A 22 805

Patentansprüche

1.  Statistisch aufgebaute, unvernetzte Copolymerisate
    mit einer Glasübergangstemperatur von höher als 70°C
    aus:

    A)  10 bis 25 Mol-% Vinylpyrrolidon und
    B)  90 bis 75 Mol-% Methacrylsäure-$C_5$-$C_8$-cyclo-
        alkyl- und/oder -$C_1$-$C_8$-alkylestern,

    wobei der molare Anteil an Methyl-Gruppen im Esterteil, bezogen auf die Summe von Methacrylsäure-$C_1$-
    $C_8$-alkyl und -cycloalkylestern, 80 Mol-% nicht überschreitet und die Summe von (A) + (B) gleich 100 ist.

2.  Copolymerisate gemäß Anspruch 1, dadurch gekennzeichnet, daß sie aus

    A)  10 bis 25 Mol-% Vinylpyrrolidon,
    B)  30 bis 67,5 Mol-% Methacrylsäuremethylester und
    C)  7,5 bis 45 Mol-% n- oder Isobutylmethacrylat

    aufgebaut sind.

3.  Copolymerisat gemäß Anspruch 1 oder 2, dadurch
    gekennzeichnet, daß die Glasübergangstemperatur
    unter 120°C liegt.

4.  Copolymerisat gemäß Anspruch 1 bis 3, dadurch
    gekennzeichnet, daß die Glasübergangstemperatur
    zwischen 85 und 100°C liegt.

Le A 22 805

5. Copolymerisat gemäß Anspruch 1 bis 4, dadurch gekennzeichnet, daß sein Wasseraufnahmevermögen 2 bis 6 Gew.-% beträgt.

6. Verwendung von Copolymerisaten gemäß Anspruch 1 bis 5 in der biomedizinischen Technik zur Herstellung von biologisch inerten Formkörpern.

7. Biologisch inerte Formkörper, die beim Gebrauch in Kontakt mit lebendem Gewebe stehen, dadurch gekennzeichnet, daß sie Copolymerisate gemäß Anspruch 1 bis 5 umfassen.

8. Linsen und Schalen für die Augenoptik, dadurch gekennzeichnet, daß sie aus einem Copolymerisat gemäß Anspruch 1 bis 5 bestehen.

Le A 22 805